# EUROPÄISCHE PATENTANMELDUNG

(11) **EP 1 475 873 A1**
(43) Veröffentlichungstag der Anmeldung: **10.11.2004**
(21) Anmeldenummer: 04009624.0
(22) Anmeldetag: 23.04.2004
(51) Int. Cl.: H02G 15/04, B60R 16/02

(54) **Vorrichtung zum Schutz der Enden von Kabelbäumen**

(30) Priorität: 03.05.2003 DE 20306844 U
(71) Anmelder: Mohr, Karl Eugen, 67466 Lambrecht (DE)
(72) Erfinder: Mohr, Karl Eugen, 67466 Lambrecht (DE)
(74) Vertreter: Patentanwälte Möll und Bitterich

(57) **Zusammenfassung**

Gegenstand der Erfindung sind Vorrichtungen zum Schutz der Enden von Kabelbäumen, bestehend aus einem Textilzuschnitt (10) aus einem reißfesten Material mit einem Velours auf der Außenseite. Der Zuschnitt (10) besitzt eine lange Außenkante (11) und eine kurze Innenkante (12). Entlang der kurzen Innenkante (12) sind drei Öffnungen (13, 14, 15) in den Textilzuschnitt (10) eingearbeitet. Benachbart zu einer der Öffnungen (15) ist das Ende eines Verschlussbandes (20) befestigt. Das Verschlussband (20) besitzt ein verbreitertes Ende (21) mit einem Schlitz (22), der mit der Öffnung (15) fluchtet. Das freie Ende des Verschlussbandes (20) trägt ein Hakenband (24), welches mit dem Velours des Textilzuschnitts (10) einen Klettverschluss bildet.

## Beschreibung

Die Erfindung betrifft Vorrichtungen zum Schutz der Enden von Kabelbäumen während Transport, Lager und/oder Produktion gemäß dem Oberbegriff des Anspruchs 1.

Während der Herstellung von Kabelbäumen, die in Kraftfahrzeugen, Maschinen, Anlagen usw. verlegt werden, ist es erforderlich, die halb fertigen Produkte zwischenzulagern oder auch von Arbeitsplatz zu Arbeitsplatz zu transportieren. Dabei muss sichergestellt werden, dass insbesondere die Enden der Kabelbäume, an denen oft schon Schrauboder Steckkontakte angebracht sind, nicht verschmutzt oder beschädigt werden. Dazu werden die Enden der Kabelbäume derzeit in eine Folie oder eine Tüte z. B. aus PE-Folie eingewickelt. Diese Folien sind zwar preiswert und schützen auch gegen Verschmutzung; das Anbringen der Folien und deren Befestigung mit Klebeband ist jedoch ebenso unbefriedigend gelöst wie das spätere Abnehmen der SchutzumhüHung und die Beseitigung des dabei entstehenden Abfalls.

Der vorliegenden Erfindung liegt daher die Aufgabe zugrunde, eine preiswerte Schutzvorrichtung anzugeben, die auch ein ausreichendes Maß an mechanischer Festigkeit bietet, so dass Beschädigungen der Kabelenden und der Steckkontakte vermieden werden.

Diese Aufgabe wird gelöst durch eine Vorrichtung mit den Merkmalen des Anspruchs 1.

Wesentliche Vorteile der Erfindung sind ihre Dauerhaftigkeit, die eine vielmalige Wiederverwendung erlaubt, ihre Preisgünstigkeit, ihre einfache Herstellung, das einfache Anbringen an dünnen und dicken Kabelbäumen und das einfache wieder Abnehmen.

Vorteilhafte Ausgestaltungen und Weiterbildungen der Erfindung ergeben sich aus den Unteransprüchen, insbesondere in Verbindung mit der nachfolgenden Beschreibung von Ausführungsbeispielen anhand der Zeichnung.

Es zeigen jeweils rein schematisch
- Fig. 1: eine Ansicht einer ersten Schutzvorrichtung im Ausgangszustand,
- Fig. 2: die Schutzvorrichtung der Fig. 1, lose befestigt auf einem Kabelbaum und
- Fig. 3: eine Ansicht einer zweiten Schutzvorrichtung.

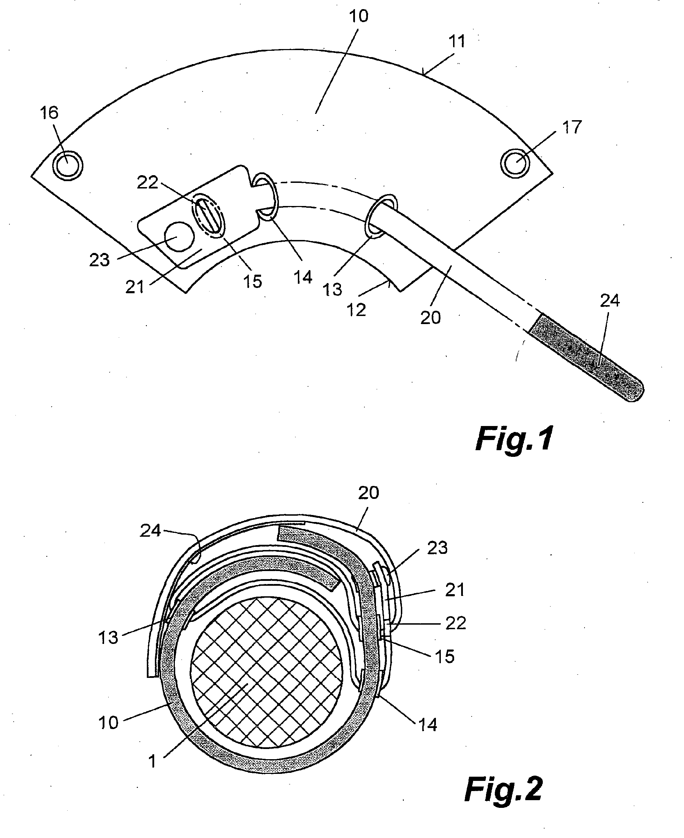

Fig. 1 zeigt rein schematisch eine Draufsicht auf eine erste, für große und bis zu 15 kg schwere Kabelbäume geeignete Schutzvorrichtung im Ausgangszustand. Man erkennt einen Textilzuschnitt 10, der etwa die Form eines Ringteils besitzt. Die Außenkante 11 und die Innenkante 12 sind hier kreisförmig. Elliptische oder gerade Kantenformen sind ebenfalls möglich. Durch die spezielle Formgebung wird erreicht, dass die Schutzvorrichtung nach ihrer Montage auf einem Kabelbaum 1 (Fig. 2) eine Art Spitztüte bildet.

Benachbart zur Innenkante 12 sind in den Textilzuschnitt 10 drei runde oder elliptische Öffnungen 13, 14, 15 eingearbeitet. Die Öffnungen 13, 14, 15 können durch Ösen verstärkt werden, wenn nötig. Durch diese drei Öffnungen 13, 14, 15 ist ein Verschlussband 20 gefädelt. Dessen linkes Ende 21 ist verbreitert und mit Hilfe eines Druckknopfs 23 lösbar am Textilzuschnitt 10 fixiert. Alternativ kann das Band 20 lose bleiben oder vernietet oder angeschweißt werden.

Das verbreiterte Ende 21 des Verschlussbandes 20 besitzt einen Schlitz 22, der mit der Öffnung 15 fluchtet.

Der Textilzuschnitt 10 besteht aus einem reißfesten Material, welches wenigstens auf der dem Betrachter zugewandten Außenseite aus Velours besteht. Das freie Ende des Verschlussbandes 20 trägt wenigstens bereichsweise ein Hakenband 24, welches zusammen mit dem Velours des Textilzuschnitts 10 einen Klettverschluss bildet.

Benachbart zur Außenkante 11 des Textilzuschnitts 10 sind Öffnungen 16, 17 als Aufhängevorrichtung eingearbeitet. Auch diese Öffnungen 16, 17 können durch Ösen verstärkt werden.

Fig. 2 zeigt rein schematisch die Schutzvorrichtung der Fig. 1, noch lose aufgewickelt auf einen Kabelbaum 1, von dem nur der Querschnitt angedeutet ist. Die Darstellung ist so gewählt, damit der Verlauf von Textilzuschnitt 10 und Verschlussband 20 zu erkennen ist.

Wie Fig. 2 erkennen lässt, wird der Kabelbaum 1 auf seiner Unterseite vom Textilzuschnitt 10, auf seiner Oberseite von dem zwischen den Öffnungen 13, 14 verlaufenden Verschlussband 20 gehalten. Das Verschlussband 20 wird dann über die Außenseite des Textilzuschnitts 10 durch die Öffnung 15 und den mit der Öffnung 15 fluchtenden Schlitz 22 geführt. Durch Ziehen am freien Ende des Verschlussbandes 20 werden Textilzuschnitt 10 und Verschlussband 20 fest mit dem Kabelbaum 1 verspannt. Sobald das Hakenband 24 am freien Ende des Verschlussbandes 20 an der Velours-Außenseite des Textilzuschnitts 10 festgelegt ist, sitzt die Verschlussvorrichtung am Kabelbaum 1 fest.

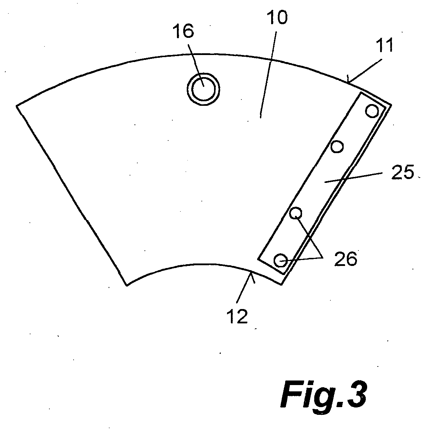

Fig. 3 zeigt rein schematisch eine Draufsicht auf eine zweite Schutzvorrichtung im Ausgangszustand. Man erkennt einen Textilzuschnitt 10, der etwa die Form eines Kreisringteils besitzt. Die Außenkante 11 und die Innenkante 12 sind kreisförmig. Elliptische oder auch gerade Kantenformen sind ebenfalls möglich. Entlang der einen Seitenkante des Textilzuschnitts 10 ist als Verschlussband ein Hakenband 25 befestigt, in diesem Fall durch vier Nieten 26. Alternativ oder auch zusätzlich kann das Hakenband 25 mit dem Textilzuschnitt 10 auch verschweißt oder verklebt werden. Benachbart zur Oberkante 11 und im Zentrum des Zuschnitts 10 ist eine Öse 16 als Aufhängevorrichtung vorgesehen.

Die in der Fig. 3 erläuterte Schutzvorrichtung ist erheblich einfacher aufgebaut als die Schutzvorrichtung der Fig. 1 und 2 und daher für kleinere und leichtere Kabelbäume bestimmt.

## Patentansprüche

1. Vorrichtung zum Schutz der Enden von Kabelbäumen (1) während Transport, Lager und/oder Produktion, umfassend
- einen Textilzuschnitt (10)
- und einen Verschluss (20, 25),
**gekennzeichnet durch** die Merkmale:
- der Textilzuschnitt (10)
- besteht aus einem reißfesten Material,
- besitzt in etwa die Form eines Ringteils mit einer langen Außenkante (11) und einer kurzen Innenkante (12)
- und besitzt eine Außenseite aus Velours,
- der Verschluss (20, 25)
- besteht aus einem reißfesten Material
- und besitzt eine Außenseite mit Haken (24).
- Haken (24) und Velours bilden einen Klettverschluss.

2. Vorrichtung nach Anspruch 1, **gekennzeichnet durch** die Merkmale:
- der Verschluss ist ein Verschlussband (20),
- der Textilzuschnitt (10) besitzt benachbart zu seiner Innenkante (12) drei auf das Verschlussband (20) abgestimmte Öffnungen (13, 14, 15),
- das Verschlussband (20)
- besteht aus einem reißfesten Material,
- besitzt an seinem einen Ende (21) einen Schlitz (22),
- besitzt an seinem anderen Ende ein Hakenband (24)
- und ist so ausgebildet, dass es **durch** die drei Öffnungen (13, 14, 15) im Textilzuschnitt (10) und **durch** den Schlitz (22) gefädelt werden kann.

3. Vorrichtung nach Anspruch 2, **gekennzeichnet durch** das Merkmal:
- das Ende (21) des Verschlussbandes (20) ist am Textilzuschnitt (10) fixiert.

4. Vorrichtung nach Anspruch 2, **gekennzeichnet durch** das Merkmal:
- das dem Schlitz (22) benachbarte Ende (21) des Verschlussbandes (20) ist mittels Druckknopf (23) am Textilzuschnitt (10) fixiert.

5. Vorrichtung nach einem der Ansprüche 2 bis 4, **gekennzeichnet durch** das Merkmai:
- das dem Schlitz (22) benachbarte Ende (21) des Verschlussbandes (20) mit dem Schlitz (22) ist verbreitert.

6. Vorrichtung nach Anspruch 1, **gekennzeichnet durch** das Merkmal:
- der Verschluss ist ein Hakenband (25), das entlang einer Seitenkante des Textilzuschnitts befestigt ist.

7. Vorrichtung nach Anspruch 6, **gekennzeichnet durch** das Merkmal:
- das Hakenband (25) ist mittels Nieten (26) befestigt.

8. Vorrichtung nach Anspruch 6 oder 7, **gekennzeichnet durch** das Merkmal:
- das Hakenband (25) ist angeklebt.

9. Vorrichtung nach Anspruch 6 oder 7, **gekennzeichnet durch** das Merkmal:
- das Hakenband (25) ist angeschweißt.

10. Vorrichtung nach einem der Ansprüche 1 bis 9, **gekennzeichnet durch** das Merkmal:
- der Textilzuschnitt (10) besitzt benachbart zu seiner langen Außenkante (11) wenigstens eine Aufhängevorrichtung (16, 17).

11. Vorrichtung nach einem der Ansprüche 1 bis 10, **gekennzeichnet durch** das Merkmal:
- die Öffnungen (13, 14, 15, 16, 17) im Textilzuschnitt (10) sind **durch** Ösen verstärkt.
